# EUROPÄISCHE PATENTANMELDUNG

(11) **EP 2 662 252 A1**
(43) Veröffentlichungstag der Anmeldung: **13.11.2013**
(21) Anmeldenummer: 12167106.9
(22) Anmeldetag: 08.05.2012
(51) Int. Cl.: B60T 17/08

(54) **Druckbehälter für pneumatische Parkbremse sowie Verfahren zur Herstellung des Druckbehälters**

(71) Anmelder: B & S Interinvest Holding SA, 2530 Luxemburg (LU)
(72) Erfinder: Dering, Ralf, 44627 Herne (DE)
(74) Vertreter: von Kreisler Selting Werner

(57) **Zusammenfassung**

Ein Druckbehälter, insbesondere ein Druckluftzylinder für pneumatische Parkbremsen weist zur Ausbildung eines topfförmigen Druckbehälters eine Umfangsseite (30), sowie eine Stirnseite (28) auf. In der Stirnseite (28) ist eine Gewindehülse (42) zur Aufnahme eines Bolzens (34) zum Lösen der Bremse angeordnet. Trotz der erheblichen auftretenden Kräfte und Momente ist es möglich, dass der erfindungsmäßig ausgestaltete Druckbehälter aus Faserverbundwerkstoff hergestellt ist.

## Beschreibung

Die Erfindung betrifft einen Druckbehälter, insbesondere einen Druckluftzylinder für pneumatische Parkbremsen, sowie ein Verfahren zur Herstellung eines derartigen Druckbehälters, insbesondere eines Druckluftzylinders.

Pneumatische Bremsen, wie sie insbesondere bei LKWs und Busse eingesetzt werden, weisen zusätzlich zu einer Fahrbremse, mit der das Bremsen während der Fahrt erfolgt, eine Parkbremse auf. Die beiden Bremsen werden über einen Pneumatik-Kompressor betätigt. In der Parkposition wird aus einem Druckbehälter Luft abgelassen, sodass die Parkbremse schließt. Hierzu wird ein auf die Bremse einwirkender Kolben, der innerhalb des Druckluftzylinders angeordnet ist, verschoben. Das Verschieben des Kolbens erfolgt durch eine Feder, insbesondere eine Spiralfeder. Zum Lösen der Parkbremse wird dem Druckluftzylinder Druckluft zugeführt, sodass der die Bremse betätigende Kolben entgegen der Federkraft zurückgedrückt wird. Da das Lösen der Parkbremse durch Zufuhr von Druckluft erfolgt, kann die Parkbremse bei ausgefallenem Pneumatik-Kompressor oder beschädigten Dichtungen nicht mehr geöffnet werden. Um eine derartig blockierte Bremse, beispielsweise zum Abschleppen eines LKWs öffnen zu können, ist ein in den Druckluftzylinder ragender Gewindebolzen vorgesehen. Der Gewindebolzen ist in einer Gewindehülse angeordnet. Die Gewindehülse ist in einer Stirnseite des Druckbehälters fixiert. Der Gewindebolzen ragt in den Betätigungskolben der Bremse hinein. Durch Herausschrauben des Gewindebolzens aus dem Druckluftzylinder kann der die Bremse betätigende Kolben zurückgezogen werden. Hierdurch erfolgt ein mechanisches Lösen der Bremse.

Der Druckluftzylinder ist mit einem Gehäuse der Bremse verbunden. Dies erfolgt üblicherweise über einen Bajonettverschluss, wobei an einem Rand des topfförmig ausgebildeten Druckbehälter mehrere Ansätze vorgesehen sind, die in entsprechende Ausnehmungen des Gehäuse eingeführt werden können, wobei durch Verdrehen des Druckluftzylinder diese Ansätze entsprechende Ansätze an dem Gehäuse hinter greifen. Aufgrund der hohen erforderlichen Bremskräfte um mit Hilfe der Parkbremse einen LKW, beispielsweise auch auf einer abschüssigen Straße zu halten, sind starke Spiralfedern vorgesehen. Der Druckluftzylinder muss dem zum Lösen der Parkbremse erforderlichen Druck von ca. 15 bar standhalten. Der üblicherweise als Bajonettverschluss ausgebildete Verschluss zwischen dem Druckluftzylinder und dem Bremsengehäuse muss eine Belastung von mindestens 13 kN (Axialkraft) aushalten. Um bei beschädigtem Kompressor die Parkbremse lösen zu können, muss der Gewindebolzen aus der Gewindehülse herausgeschraubt werden. Hierbei können Drehmomente von bis zu 200 Nm auftreten. Aufgrund der auftretenden Kräfte und des hohen Innendrucks werden bekannte Druckluftzylinder aus Aluminium oder Stahl im Tiefziehverfahren hergestellt. Die Herstellung derartiger Behälter aus Aluminium und Stahl ist aufwendig und erfordert ca. 7 Arbeitsschritte. Ferner ist die Menge an eingesetztem Material groß, sodass insbesondere bei Druckluftzylinder aus Aluminium hohe Materialkosten entstehen.

Aufgabe der Erfindung ist, die Herstellungskosten für einen Druckbehälter, insbesondere einen Druckluftzylinder für pneumatische Parkbremsen zu verringern.

Die Lösung der Aufgabe erfolgt erfindungsgemäß durch einen Druckbehälter, insbesondere einen Druckluftzylinder gemäß Anspruch 1 beziehungsweise durch ein Verfahren zur Herstellung eines derartigen Druckbehälters, insbesondere eines Druckluftzylinders gemäß Anspruch 10.

Der erfindungsgemäße Druckbehälter, insbesondere Druckluftzylinder für pneumatische Parkbremsen weist eine im Wesentlichen zylindrische Umfangsseite sowie eine mit der Umfangsseite verbundenen Stirnseite auf. Hierdurch ist ein im Wesentlichen topfförmiger Druckbehälter ausgebildet. In der Stirnseite ist eine, insbesondere aus Metall oder Aluminium hergestellte Gewindehülse angeordnet. Die Gewindehülse dient zur Aufnahme eines Bolzens zum Lösen der Bremse. Dies ist beispielsweise bei einem Ausfall des Pneumatik-Kompressors oder auch beim Auftreten von Undichtigkeiten erforderlich. Trotz der hohen Kräfte, die von dem Druckbehälter, insbesondere dem Druckluftzylinder aufgenommen werden müssen, haben Untersuchungen gezeigt, dass es überraschenderweise möglich ist auch einen derartigen hochbelasteten Druckbehälter, insbesondere einen Druckluftzylinder aus faserverstärktem Kunststoff herzustellen.

Nachfolgend wird der erfindungsgemäße Druckbehälter anhand der bevorzugten Ausführungsform eines Druckluftzylinders erläutert.

Eine belastungsgerechte Ausgestaltung des aus faserverstärktem Kunststoff, insbesondere glasfaserverstärktem Kunststoff hergestellten Druckluftzylinder weist vorzugsweise eine gegenüber der Umfangsseite dickere Stirnseite auf. Die Stirnseite sowie gegebenenfalls auch ein Übergangsbereich zwischen der Stirnseite und der Umfangsseite weist vorzugsweise eine Dicke von mindestens 4 mm, insbesondere mindestens 5 mm und besonders bevorzugt mindestens 6 mm auf. Die Umfangsseite weist in bevorzugter Ausführungsform eine Dicke von 2 bis 4 mm auf. Im Übergangsbereich zwischen der Umfangsseite und der Stirnseite erfolgt vorzugsweise ein kontinuierlicher Übergang, sodass die Wanddicke des Druckluftzylinders im Querschnitt keine Stufen aufweist, an der Spannungsspitzen auftreten würden. Ein derart aufgebauter Behälter hält, wie Versuche gezeigt haben, dem Innendruck auch bei einer hohen Anzahl von Lastwechsel beziehungsweise Bremsvorgängen stand. Auch die auftretenden Axialkräfte können von dem Druckluftzylinder aufgenommen werden.

Zum Lösen der Bremse in einer Notsituation, d.h. beispielsweise bei Ausfall des Kompressors oder bei auftretenden Undichtigkeiten muss der in der Gewindehülse angeordnete Bolzen herausgeschraubt und hierdurch der in dem Druckluftzylinder angeordnete Kolben gegen die Federkraft zurückgezogen werden. Hierbei treten Drehmomente von bis zu 200 Nm auf. Es muss daher sichergestellt sein, dass die in der Stirnseite des Druckluftzylinders angeordnete Gewindehülse derartigen Belastungen standhält und nicht mitgedreht werden kann. Dies kann beispielsweise dadurch realisiert werden, dass eine formschlüssige Verbindung zwischen der Gewindehülse und der Stirnseite hergestellt wird. Um die hohen Drehmomente mit den hiermit verbunden Kräfte aufnehmen zu können, können an der Außenseite der Hülse im Wesentlichen radial verlaufende Fortsätze, beziehungsweise Dornen vorgesehen sein, die in die Stirnseite des Druckluftzylinders ragen. Entsprechende Dornfortsätze weisen vorzugsweise eine Länge von mindestens 5 mm auf, wobei am Umfang verteilt, vorzugsweise mindestens 6, insbesondere mindestens 8 derartige Dornfortsätze vorgesehen sind.

Bei einer besonders bevorzugten Weiterbildung der Erfindung sind zusätzlich oder an der Stelle des Vorsehens von Dornfortsätzen in der Gewindehülse Einbuchtungen vorgesehen. In die Einbuchtungen wird bei der Herstellung des Druckluftzylinders Kunststoffmaterial eingepresst. Hierdurch kann ebenfalls eine ausreichend gute, Drehmomente von bis zu 200 Nm, standhaltende formschlüssige Verbindung realisiert werden. Bei den Einbuchtungen handelt es sich vorzugsweise um radial ausgebildete Einbuchtungen, die beispielsweise als Sacklöcher oder Sackbohrungen ausgebildet sind. Der eingepresste Kunststoff weist somit stiftförmige Ansätze auf, die in die Einbuchtungen ragen. Hierdurch kann eine sehr gute Kraftübertragung realisiert werden. Eine auf diese Weise mit der Stirnseite des Druckluftzylinders verbundene Gewindehülse hält wie Versuche gezeigt haben Drehmomenten von 200 Nm stand.

Die Sacklöcher beziehungsweise Sackbohrungen weisen vorzugsweise eine Tiefe von mehr als 3 mm, insbesondere mehr als 4 mm. Ferner ist es bevorzugt, dass 6 bis 8 Sacklöcher am Umfangs insbesondere regelmäßig verteilt angerordnet sind.

Vorzugsweise weist der Druckluftzylinder an der Stirnseite eine, vorzugsweise im Wesentlichen kegelstumpfförmige Vertiefung auf. Am Boden dieser Vertiefung ist die Gewindehülse angeordnet. Das Vorsehen einer derartigen Vertiefung hat den Vorteil, dass der Kopf des Bolzens der zum Lösen der Bremse dient, innerhalb der Vertiefung angeordnet ist und nicht gegenüber einer Oberseite des Druckluftzylinders vorsteht.

Ferner weist ein der Stirnseite gegenüberliegender Rand der Umfangsseite Verbindungsansätze auf. Diese dienen zum Verbinden der Druckhülse mit einem Bremsengehäuse. Insbesondere sind mehrere kreisringsegmentförmige Verbindungsansätze am Umfang verteilt angeordnet. Diese können in entsprechende Ausnehmungen des Gehäuses eingesetzt und durch Verdrehen fixiert werden. Bevorzugt ist es durch die Verbindungsansätze einen Bajonettverschluss zu realisieren.

Zur Herstellung eines Druckluftzylinders, insbesondere eines Druckluftzylinders mit den vorstehend beschriebenen Merkmalen, wird in einem ersten Schritt eine Faserverbundmatte erwärmt, wobei es sich bei den Fasern in bevorzugter Ausführungsform um Glasfasern handelt. Die erwärmte Matte, die insbesondere auf ca. 205 °C erwärmt wird, wird sodann in eine topfartige Außenform eingelegt. Hierbei kann das Erwärmen der Matte, zumindest sobald diese eine ausreichende Flexibilität erreicht hat, auch durch Erwärmen der Außenform erfolgen.

Anschließend wird in die Faserverbundmatte in einen die Stirnseite des Druckluftzylinders ausbildenden Bereich die Gewindehülse eingesetzt. Im nächsten Schritt wird eine Innenform in die Außenform eingeführt, wobei es unerheblich ist, ob die Innen- und/oder die Außenform bewegt wird. Relevant ist ein Schließen der beiden Formen, sodass zwischen den beiden Formen die Faserverbundmatte angeordnet ist. Ferner erfolgt ein Aushärten der Faserverbundmatte und Entnehmen des fertigen Druckluftzylinders. Das Entnehmen erfolgt üblicherweise durch Auswerfen mit Hilfe von Auswerferstiften.

Um die Gewindehülse in der Stirnseite des Druckbehälters eindeutig zu zentrieren, ist es bevorzugt, dass die Innenform einen Zentrierstift aufweist. Beim Zusammenführen der beiden Formen erfolgt über den Zentrierstift automatisch ein Zentrieren der Gewindehülse am Mittelpunkt der Stirnseite. Der Zentrierstift ist hierbei vorzugsweise federbelastet, sodass zunächst eine Zentrierung der Hülse gewährleistet ist, bevor die beiden Formen vollständig zusammengefahren werden.

Bei einer besonders bevorzugten erfindungsgemäßen Weiterbildung des Verfahrens wird beim Zusammenführen der Innenform und der Außenform Kunststoffmaterial in Einbuchtungen, insbesondere Sacklöcher der Gewindehülse eingedrückt. Hierdurch ist eine zuverlässiger formschlüssige Verbindung zwischen der Gewindehülse und der Stirnseite des Druckluftzylinders realisiert.

Nachfolgend wird die Erfindung anhand einer bevorzugten Ausführungsform unter Bezugnahme der anliegenden Zeichnungen näher erläutert.

Es zeigen:
- Fig. 1: eine schematische Schnittansicht eines montierten Druckluftzylinders,
- Fig. 2: eine vergrößerte Ansicht des Bereichs II in Figur 1,
- Fig. 3: eine schematische perspektivische Ansicht des Druckluftzylinders und
- Fig. 4: eine schematische Schnittansicht einer Vorrichtung zur Herstellung des Druckluftzylinders.

Der Druckluftzylinder 10 ist über einen Bajonettverschluss 12 mit einem Pumpengehäuse 14 verbunden. Innerhalb des Druckluftzylinders 10 ist ein Kolben 16 angeordnet, der auf eine Membran 18 einwirkt. Über die Membran 18 erfolgt sodann über weitere nicht dargestellte Bauteile ein Betätigen der Bremse.

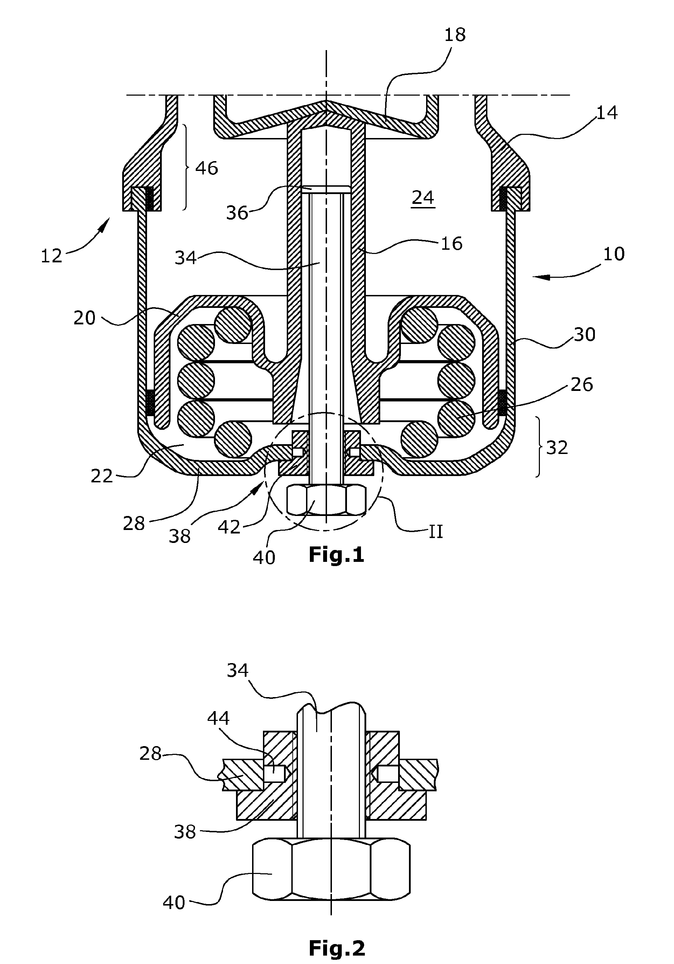

Der Kolben 16 ist mit einem deckelförmigen Ansatz 20 verbunden, beziehungsweise einstöckig ausgebildet. Zwischen einem Rand des deckelförmigen Ansatzes 20 und einer Innenseite des Druckluftzylinders 10 ist eine Dichtung 22 angeordnet. In der dargestellten Lage ist die Parkbremse gelöst. Hierzu ist über einen nichtdargestellten Anschluss dem Innenraum 24 des Druckluftzylinders 10 Druckluft zugeführt, sodass der Kolben 16 zusammen mit dem Ansatz 20 entgegen einer durch eine Spiralfeder 24 aufgebrachte Kraft in der in Figur 1 dargestellten Lage gehalten wird. Die Feder 26 stützt sich an einer Innenseite einer Stirnseite 28 des Druckluftzylinders 10 ab.

Die Stirnseite 28 ist mit einer Umfangsseite 30 des Druckluftzylinders einstückig aus faserverstärktem Kunststoffmaterial hergestellt. Hierbei ist die Wandstärke der Stirnseite 28 dicker als die Wandstärke der Umfangsseite 30. In einem Übergangsbereich 32 erfolgt ein kontinuierlicher stufenfreier Übergang der Wandstärke zwischen Umfangsseite 30 und Stirnseite 28.

Zum Betätigen der Parkbremse wird die Druckluft aus dem Innenraum 24 des Druckluftzylinders 10 herausgelassen, sodass die Feder 26 den Kolben 16 in Richtung der Membran 18 drückt und somit die Bremse betätigt. Wenn beispielsweise der Kompressor nicht funktioniert oder beispielsweise die Dichtung 22 beschädigt ist, ist ein Lösen der Parkbremse durch Zuführen von Druckluft nicht mehr möglich. Hierzu ist im Inneren des Druckluftzylinders 10 ein Bolzen 34 mit Außengewinde vorgesehen. Der Bolzen 34 weist einen Bolzenkopf 36 auf, der innerhalb des Kolbens 16 angeordnet ist. Außerhalb des Gehäuses 10 in einer im Wesentlichen kegelstumpfförmigen Vertiefung 38 des Druckluftzylinders 10 ist mit dem Bolzen 34 eine Mutter 40 verbunden. Der Bolzen 34 ist in eine Gewindehülse 42 mit Innengewinde eingeschraubt.

Zum Lösen der Bremse in einer derartigen Notsituation wird der Kolben 34 herausgeschraubt und zieht somit den Kolben 16 entgegen der Federkraft der Feder 26 zurück. Hierbei wirken erhebliche Kräfte und Momente auf die Gewindehülse 42.

Um bei dem Herausschrauben des Bolzens 34 ein Ausreißen oder Mitdrehen der Gewindehülse 42 zu vermeiden, weist die Gewindehülse 42 im dargestellten Ausführungsbeispiel als Sackbohrungen 44 ausgebildete Einbuchtungen auf. Vorzugsweise sind am Umfangs verteilt, mindestens 6, insbesondere mindestens 8 derartige Sackbohrungen 44 vorgesehen. In die Sackbohrungen ist Kunststoffmaterial eingepresst, sodass eine sehr gute formschlüssige Verbindung zwischen der Gewindehülse und der Stirnseite 28 der Druckhülse 10 realisiert ist.

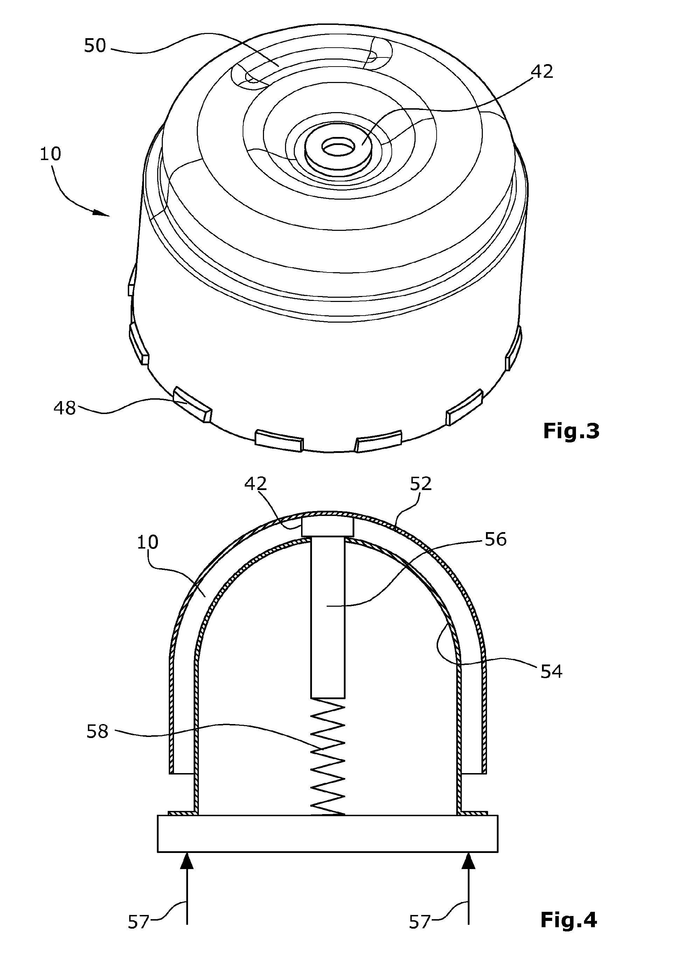

Zur Ausbildung des Bajonettverschlusses 12 an einem Rand 46 der Umfangsseite 30 sind am Umfang mehrere kreisringsegmentförmige Ansätze 48 (Figur 3) vorgesehen. Das Gehäuse 14 weist Ausnehmungen auf um den Rand 46 axial in einen Gehäuseschlitz 50 einzustecken und durch Verdrehen in Umfangsrichtung diesen zu fixieren.

Die Stirnseite 28 weist ferner eine weitere Vertiefung 50 auf. Diese dient als auf der Innenseite vorgesehene Ausbuchtung als Verdreh-Sicherung für die Feder 26.

Gemäß dem erfindungsgemäßen Verfahren wird zunächst eine Faserverbundmatte erwärmt und die erwärmte Faserverbundmatte sodann in eine Außenform 52 (Figur 4) eingelegt. Hierbei kann ein vollständiges Erwärmen der Matte auch durch Erwärmen der Außenform 52 erfolgen. Im nächsten Schritt wird die Gewindehülse 42 in den Bereich der Fasermatte eingesetzt, der später die Stirnseite 28 des Druckluftzylinders 10 bildet. Im nächsten Schritt wird eine Innenhülse 54 in Richtung der Pfeile 57 mit Hilfe eines nicht näher dargestellten Mechanismusses in die Innenform 54 eingeführt. Hierbei wird vor dem vollständigen Schließen der Form ein Zentrierstift 56 in die Gewindehülse 42 eingeführt und zentriert diese. Ebenso ist es möglich die Gewindehülse 42 vor dem Einführen der Innenform 54 auf dem Zentrierstift 56 anzuordnen und die Innenform 54 sodann zusammen mit der Gewindehülse 42 in die Außenform 52 einzuführen. Sobald die Gewindehülse 42 in ihrer Endposition angeordnet und die beiden Formen 52,54 vollständig miteinander verschlossen sind, ist der Zentrierstift gegen die Kraft einer Feder 58 zurückgedrückt. Die Feder 58 unterstützt zusätzlich das Öffnen der Form nach erfolgter Aushärtung des Faserverbundmaterials, wobei hierzu zusätzlich Auswerfer vorgesehen sind.

## Patentansprüche

1. Druckbehälter, insbesondere Druckluftzylinder für eine pneumatische Parkbremse, mit
einer im Wesentlichen zylindrischen Umfangsseite (30),
einer mit der Umfangsseite (30) verbundenen Stirnseite (28) zur Ausbildung eines topfförmigen Druckbehälters (10) und
einer in der Stirnseite (28) angeordneten Gewindehülse (42) zur Aufnahme eines Bolzens (34) zum Lösen der Bremse,
**dadurch gekennzeichnet, dass**
die Umfangsseite (30) und die Stirnseite (28) des Druckbehälters (10) aus faserverstärktem Kunststoff hergestellt ist.

2. Druckbehälter nach Anspruch 1, **dadurch gekennzeichnet, dass** die Gewindehülse (42) zur formschlüssigen Verbindung mit der Stirnseite (28) Einbuchtungen (44) aufweist, in die Kunststoffmaterial eingepresst ist.

3. Druckbehälter nach Anspruch 2, **dadurch gekennzeichnet, dass** die Einbuchtungen radial angeordnet sind, insbesondere als radial verlaufende Sacklöcher (44) ausgebildet sind.

4. Druckbehälter nach Anspruch 3, **dadurch gekennzeichnet, dass** die Sacklöcher (44) eine Tiefe von mindestens 3 mm, vorzugsweise mindestens 4 mm aufweisen.

5. Druckbehälter nach Anspruch 3 oder 4, **dadurch gekennzeichnet, dass** mindestens 6, vorzugsweise mindestens 8 Sacklöcher, insbesondere regelmäßig am Umfang der Gewindehülse (42) verteilt angeordnet sind.

6. Druckbehälter nach einem der Ansprüche 1 bis 4, **dadurch gekennzeichnet, dass** die Stirnseite (28) eine insbesondere im Wesentlichen kegelstumpfförmige Vertiefung (38) aufweist, in der die Gewindehülse (42) angeordnet ist.

7. Druckbehälter nach einem der Ansprüche 1 bis 5, **dadurch gekennzeichnet, dass** die Stirnseite (28) und/oder ein Übergangsbereich (32) zwischen der Stirnseite (28) und der Umfangsseite (30) eine Wandstärke von mindestens 4 mm, insbesondere mindestens 5 mm und besonderes bevorzugt mindestens 6 mm aufweist.

8. Druckbehälter nach einem der Ansprüche 1 bis 7, **dadurch gekennzeichnet, dass** die Umfangsseite (30) eine Wandstärke von 3 bis 4 mm aufweist.

9. Druckbehälter nach einem der Ansprüche 1 bis 8, **dadurch gekennzeichnet, dass** an einem der Stirnseite 28 gegenüberliegenden Rand (46) der Umfangsseite (30) Verbindungsansätze (48) zur Verbindung mit einem Bremsengehäuse (14) vorgesehen sind.

10. Verfahren zur Herstellung eines Druckbehälters, insbesondere eines Druckluftzylinder für pneumatische Parkbremsen, insbesondere eines Druckbehälter nach einem der Ansprüche 1 bis 9 mit den Schritten:
Erwärmen einer Faserverbundmatte,
Einlegen der Faserverbundmatte in eine topfförmige Außenform (52),
Einsetzen einer Gewindehülse (42) in einen eine Stirnseite des Druckbehälters ausbildenden Bereich der Faserverbundmatte,
Einführen einer Innenform (54) in die Außenform (52), sodass die Faserverbundmatte zwischen beiden Formen angeordnet ist,
Aushärten der Faserverbundmatte und
Entnehmen des fertigen Druckbehälters (10).

11. Verfahren nach Anspruch 10, wobei die Innenform (54) einen insbesondere federbelasteten Zentrierstift (56) zur Zentrierung der Gewindehülse (42) in der Stirnseite (28) aufweist.

12. Verfahren nach Anspruch 10 oder 11, **gekennzeichnet dadurch, dass** beim Einführen der Innenform (54) in die Außenform (52) Kunststoffmaterial in Einbuchtungen (44), insbesondere Sacklöcher (44) der Gewindehülse (42) zur formschlüssigen Verbindung eingepresst wird.
